Europäisches Patentamt

European Patent Office

Office européen des brevets

(19)

(11) **EP 0 995 990 A2**

(12) **EUROPÄISCHE PATENTANMELDUNG**

(43) Veröffentlichungstag:
26.04.2000 Patentblatt 2000/17

(51) Int Cl.⁷: **G01N 29/20**

(21) Anmeldenummer: **99121226.7**

(22) Anmeldetag: **23.10.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **24.10.1998 DE 19849102**

(71) Anmelder: **NUKEM Nutronik GmbH**
**63754 Alzenau (DE)**

(72) Erfinder:
• **Koch, Roman Dr. Ing.**
**63768 Hösbach (DE)**

• **Hellmuth, Joachim**
**63517 Rodenbach (DE)**
• **Gripp, Sebastian Dipl. Phys.**
**63755 Alzenau (DE)**

(74) Vertreter:
**Stoffregen, Hans-Herbert, Dr. Dipl.-Phys.**
**Patentanwälte Strasse & Stoffregen**
**Postfach 2144**
**63411 Hanau (DE)**

(54) **Verfahren und Vorrichtung zur zerstörungsfreien Prüfung von Gegenständen auf Fehlstellen im Gefüge mittels Rayleigh-Wellen**

(57) Gegenstand der Erfindung sind ein Verfahren und eine Vorrichtung zum zerstörungsfreien Prüfen von Gegenständen (24) auf oberflächenoffene und/oder oberflächennahe Fehlstellen im Gefüge mittels Rayleigh-Wellen. Die Einstrahlungswinkel ($\alpha$) sind hierbei auf $1,04 \pm 0,2°$ des Winkels eingestellt, der sich aus dem Quotienten der Schallgeschwindigkeit des Mediums (26) vor der Oberfläche und der Geschwindigkeit der Rayleigh-Welle im Gegenstand bzw. Prüfobjekt (24) ergibt.

FIG.1

**Beschreibung**

Die Erfindung bezieht sich auf ein Verfahren und eine Vorrichtung zur zerstörungsfreien Prüfung von Gegenständen bzw. Prüfobjekten auf Fehlstellen im Gefüge, wobei der Oberfläche des jeweiligen Gegenstandes bzw. Prüfobjekts Ultraschallwellen zur Erzeugung von Rayleigh-Wellen im Gegenstand bzw. Prüfobjekt schräg zugeführt werden, und wobei aus der Oberfläche des Gegenstands bzw. Prüfobjekts austretende, von den Rayleigh-Wellen verursachte Ultraschallwellen erfasst und deren Amplituden gemessen werden.

Ein Verfahren und eine Vorrichtung der vorstehend beschriebenen Art sind bekannt (C.L. Ho et al. in Experimental Mechanics, January 1974, Seiten 42-48). Mit dem bekannten Verfahren werden in länglichen Prüfkörpern, die unter Zugspannung stehen, die Geometrie von Fehlstellen, z. B. Kerben, sowie die Änderungen der Fehlstellengeometrie und die Ausweitung der Fehlstellenfront unter verschiedenen Belastungen aus der empfangenen Ultraschallwellenamplitude bestimmt. Bei der bekannten Vorrichtung sind ein Ultraschall-Sender und ein im Abstand von diesem angeordneter Ultraschall-Empfänger jeweils auf einer Seite einer Fehlstelle angeordnet und stationär mittels Fett an das Prüfobjekt angekoppelt.

Es ist auch bekannt, zur zerstörungsfreien Feststellung des Werkstoffzustands von Bauteilen, insbesondere zur Feststellung von Zeitstandsschädigungen, mit einem Ultraschall-Sender an einem ersten Messpunkt der Bauteiloberfläche eine Oberflächenwelle im gewobbelten Dauerstrichbetrieb anzuregen und die Schwingung an mindestens einem weiteren Messpunkt der Bauteiloberfläche im Abstand vom ersten Messpunkt mit einem Ultraschall-Empfänger aufzunehmen. Der Ultraschall-Sender ist an der Bauteiloberfläche angeklebt, während der Ultraschall-Empfänger entweder ebenfalls angeklebt oder verschiebbar ist. Aus der Phasenverschiebung zwischen zwei Oberflächenwellensignalen wird die Ausbreitungsgeschwindigkeit der Oberflächenwelle als Funktion der Eindringtiefe im Material bestimmt (DE 196 40 859 A1).

Bei einem anderen bekannten Verfahren zur zerstörungsfreien Materialprüfung wird auf die Oberfläche des Materials ein Bündel Ultraschallwellen gerichtet und das von der Oberfläche reflektierte Bündel gemessen. Es werden der Einfallswinkel und die Wellenlänge geändert. Für wenigstens zwei verschiedene Wellenlängen wird der kritische Einfallswinkel bestimmt, für den die Energie des reflektierten Bündels durch ein Minimum geht. Der Winkel ist eine Funktion der Fortpflanzungsgeschwindigkeit der Rayleigh-Wellen. Aus den Fortpflanzungsgeschwindigkeiten der Rayleigh-Wellen können die mechanischen Eigenschaften für zunehmend variable Stärken des Materials bestimmt werden. Aus dem Tiefenprofil für die Oberflächenwellengeschwindigkeit wird die Einhärtungstiefe und die Homogenität der Härtungsschicht festgestellt (DE 26 52 210 A1).

Um die Strukturanisotropie von Oberflächen festzustellen, ist es bekannt, die Richtungsabhängigkeit von Oberflächenwellen auf diesen Flächen zu messen. Hierzu wird ein Sensorpaar in rotierender Kontakttechnik verwendet (JP 10 153 585 A, Patent Abstracts of Japan).

Schließlich ist es bekannt, ein Prüfobjekt in einem Wasserbad mit Ultraschallwellen zu beaufschlagen, die unter einem kritischen Winkel eingeschallt werden. Dabei werden die Veränderungen des Reflexionsmusters bei der Einschallung unter dem kritischen Winkel erfasst, indem die Intensitätsverteilung des reflektierten Wellenfelds gemessen wird. Der reflektierte Schall wird schlierenoptisch gemessen (W. G: Mayer in Ultrasonics, May 1981, Seiten 109 bis 111).

Der Erfindung liegt das Problem zugrunde, zur zerstörungsfreien Prüfung von Gegenständen mittels Rayleigh-Wellen ein Verfahren und eine Vorrichtung anzugeben, die sich zur automatisierten, abtastenden Erfassung von oberflächennahen und/oder oberflächenoffenen Fehlstellen im jeweiligen Gegenstand bzw. Prüfobjekt eignen und hohe Prüfgeschwindigkeiten, d. h. die Prüfung großer Oberflächenbereiche in kurzer Zeit, ermöglichen.

Das Problem wird bei einem Verfahren der eingangs beschriebenen Art erfindungsgemäß dadurch gelöst, dass wenigstens ein Ultraschall-Sender und ein Ultraschall-Empfänger mit dem jeweiligen Gegenstand bzw. Prüfobjekt zur Ankopplung der Ultraschallwellen in ein Flüssigkeitsbad eingetaucht werden, dass Ultraschall-Sender und Ultraschall-Empfänger jeweils in einem eine Ultraschallwellenlänge der vom Ultraschall-Sender ausgesandten Ultraschallwellen betragenden Abstand oder in einem mehr als eine Ultraschallwellenlänge betragenden Abstand von der Oberfläche des Gegenstands bzw. Prüfobjekts angeordnet sind, dass Oberflächenabschnitte des Gegenstands bzw. Prüfobjekts während einer Relativbewegung zwischen Ultraschall-Sender und Ultraschall-Empfänger einerseits und dem Gegenstand andererseits mit den Ultraschallwellen beaufschlagt werden und dass die Amplituden der im Ultraschall-Empfänger erfassten Ultraschallwellen zur Feststellung von fehleranzeigenden Abweichungen aufgrund oberflächennahen und/oder oberflächenoffener Fehlstellen mit Werten für Amplituden verglichen werden, die Amplituden von Ultraschallwellen aus einem keine oberflächenoffene und/oder oberflächennahe Fehlstellen aufweisenden, von Rayleigh-Wellen durchlaufenen Oberflächenabschnitts entsprechen. Unter Fehlstellen sind hierbei Stellen im Gegenstand bzw. Prüfobjekt zu verstehen, an denen kein Material aus dem der Gegenstand besteht, vorhanden ist. Es handelt sich z. B. um Risse oder Einschlüsse aus einem anderen Material. Das erfindungsgemäße, in Tauchtechnik ausgeübte Verfahren eignet sich besonders zur automatisierten, abtastenden Prüfung mit hohen Geschwindigkeiten zwischen Ultraschall-Wandlern und dem jeweils zu prüfenden Gegenstand bzw. Werkstück. Es kann mit dem erfindungsgemäßen Verfahren die gesamte Oberfläche eines Prüfobjekts bzw. Gegenstands relativ schnell abgetastet werden. Für eine hohe Prüfgeschwindigkeit ist besonders der erfindungsgemäße Abstand zwischen Prüfobjekt und Ultrachall-Sender und - Empfänger günstig. Die den fehlerfreien Abschnitten zugeordneten Werte der Amplituden werden von einem Prüfobjekt gewonnen, das gleiche Prüfabschnitte hat, die keine Fehlstellen haben, oder vom Prüfobjekt bzw. Gegenstand selbst aus den Amplituden eines Abschnitts ohne Fehlstellen im Oberflächenbereich. Die Ausbreitung der Oberflächenwellen bleibt auf eine an die Oberfläche angrenzende Schicht von etwa einer Wellenlänge beschränkt, d. h. das Innere des Prüfobjekts ist nicht beteiligt.

Mit dem erfindungsgemäßen Verfahren können in Gegenständen bzw. Prüfobjekten Fehlstellen im Material, insbesondere Oberflächenrisse oder oberflächennahe Risse festgestellt werden. Solche Risse im Prüfobjekt schwächen bzw. reflektieren die Rayleigh- oder Oberflächenwellen, wodurch sich die Unterschiede zwischen den bei fehlerhaften und fehlerfreien Prüfobjekten empfangenen Signalen ergeben. Die Oberflächenwellen folgen auch Krümmungen der Oberfläche, so dass nicht nur Gegenstände mit ebenen Oberflächen geprüft werden können. Zweckmäßigerweise wird das erfindungsgemäße Verfahren zur Qualitätssicherung in der Fertigung eingesetzt.

Bei einer bevorzugten Ausführungsform werden Rayleigh- oder Oberflächenwellen in den zu prüfenden Gegenstandsbereichen in sich kreuzenden Richtungen zugleich oder zeitlich nacheinander mit getrennten Ultraschall-Sendern und Ultraschall-Empfängern erzeugt. Mit dieser Prüfweise lassen sich Oberflächenfehler oder oberflächennahe Fehler mit beliebiger Orientierung feststellen.

Es ist günstig, wenn die Ultraschallwellen im Impulsbetrieb mit einer Frequenz während der Impulsdauer von mehr als 3 MHz z. B. 5 MHz erzeugt werden. Diese Impulsfrequenz erlaubt eine hohe Prüfempfindlichkeit. Der Abstand von wenigstens einer Ultraschallwellenlänge zwischen Prüfobjekt und Sende- bzw. Empfangswandler ermöglicht hohe Prüfgeschwindigkeiten, d. h. hohe Relativgeschwindigkeiten zwischen Messeinrichtungen und Prüfobjekt.

Bei einer besonders zweckmäßigen Ausführungsform mit eigenständigem erfinderischen Gehalt werden die Ultraschallwellen als Longitudinalwellen mit einem mindestens eine kugeloberflächensegmentförmige konische oder konkave Abstrahlungsoberfläche bzw. -fläche aufweisenden Ultraschall-Sender, der ebenfalls als Ultraschall-Empfänger ausgebildet ist, derart erzeugt, dass die Ultraschallwellen in einer Fokussierstelle konvergieren, die auf die Oberfläche des Gegenstands bzw. Prüfobjekts eingestellt ist, wobei die Einstrahlungswinkel wenigstens eines Teils des Longitudinalwellen den Winkel für die Erzeugung von Rayleigh-Wellen im Gegenstand bzw. Prüfobjekt entsprechen. Unter Einstrahlungswinkel sind die Winkel zwischen der Normalen auf die Oberfläche an der Fokussierstelle und den Geraden bzw. Richtungen zu verstehen, längs denen sich die Longitudinalwellen ausbreiten.

Mit diesem Verfahren werden im Prüfobjekt bzw. Gegenstand Rayleigh-Wellen mit großer Intensität an der Fokussierstelle auf der Oberfläche hervorgerufen. Die so erzeugten Rayleigh-Wellen breiten sich kreisförmig radial vom Mittelpunkt des Schallauftreffpunkts aus, so dass gleichzeitig ein großer Oberflächenbereich von den Rayleigh-Wellen in verschiedenen Richtungen erfasst wird.

Vorzugsweise ist der Ultraschall-Sender zugleich als Ultraschall-Empfänger ausgebildet, mit dem von Fehlstellen reflektierte Rayleigh-Wellen nach der Umwandlung in Longitudinalwellen außerhalb des Gegenstands bzw. Prüfobjekts empfangen und ausgewertet werden.

Besonders günstig ist es, wenn der Einstrahlungswinkel der Ultraschallwellen an der Oberfläche 4 % oder nahezu 4 % größer als der Winkel ist, der als arcus sinus aus den Quotienten der Schallgeschwindigkeit der einfallenden Welle und der Geschwindigkeit der Rayleigh-Welle im Prüfobjekt bestimmt ist.

Als Ankoppelmaterial wird zwischen den Sende-, Empfangsgeräten oder -köpfen häufig Wasser verwendet, das eine Schallgeschwindigkeit der Longitudinalwelle von 1480 m/s hat, die niedriger ist als die Schallgeschwindigkeit in den Prüfobjekten. Wenn die Prüfobjekte aus ferritischem Feinkornstahl bestehen, haben diese eine höhere Schallgeschwindigkeit. Beträgt diese im Stahl z. B. 3037 m/s für die Rayleigh-Welle, dann ist ein Einstrahlungswinkel von 30,3° ± 0,2° besonders günstig, um Materialfehler feststellen zu können.

Bei einer Vorrichtung zur zerstörungsfreien Prüfung von Gegenständen bzw. Prüfobjekten auf Fehlstellen im Gefüge mit wenigstens einem durch ein Medium an den jeweils zu prüfenden Gegenstand bzw. das Prüfobjekt angekoppelten Ultraschall-Sender, der Ultraschallwellen erzeugt, die zur Hervorrufung von Rayleigh-Wellen schräg zur Oberfläche des Gegenstands bzw. Prüfobjekts ausgerichtet sind, wobei wenigstens ein durch das Medium an den Gegenstand bzw. das Prüfobjekt angekoppelter Ultraschall-Empfänger für den Empfang von Ultraschallwellen ausgebildet ist, deren Amplituden gemessen werden, wird das Problem erfindungsgemäß dadurch gelöst, dass der Ultraschall-Sender und der Ultraschall-Empfänger in Tauchtechnik in einer Flüssigkeit an den Gegenstand bzw. das Prüfobjekt zur Ultraschallwellenübertragung in einem Abstand vom Gegenstand bzw. Prüfobjekt angekoppelt sind, der eine Ultraschallwellenlänge der vom Ultraschall-Sender ausgesendeten Ultraschallwellen oder mehr als eine Ultraschallwellenlänge beträgt, dass der Ultraschall-Sender und der Ultraschall-Empfänger einerseits und das Prüfobjekt bzw. der Gegenstand andererseits relativ zueinander bewegbar sind und dass der Ultraschall-Sender und der Ultraschall-Empfänger mit einer Steuer- und Auswerteinheit verbunden sind, mit der der Ultraschall-Sender von elektrischen Impulsen beaufschlagt wird und in der die Amplituden der in vorgebbaren Zeitfenstern empfangenen Ultraschallwellen zur Feststellung von fehleranzeigenden Abweichungen aufgrund von Fehlstellen mit Werten von Amplituden vergleichbar sind, die Amplituden von Ultraschallwellen zugeordnet sind, die einer Oberfläche bzw. einem Oberflächenabschnitt ohne Fehlstellen an und/oder nahe an der Oberfläche zugeordnet sind.

Die Vergleichswerte lassen sich aus der Messung der Empfangssignale an fehlerfreien Oberflächenbereichen, die von Rayleigh-Wellen zwischen dem Sender- und dem Empfängerkopf durchlaufen werden, gewinnen. Die in der Steuer- und Auswerteinheit festgestellten Signalamplituden können durch einen Bediener zum Beispiel an einem Bildschirm verglichen werden. Eine Speicherung von Werten ist nicht zwingend erforderlich.

Bei einer bevorzugten Ausführungsform sind zwei Paare je aus einem Ultraschall-Sendewandler und einem Ultraschall-Empfangswandler kreuzweise am jeweiligen Prüfobjekt angeordnet. Damit können Oberflächenfehler beliebiger Orientierung erfasst werden.

Zweckmäßigerweise beaufschlagt die Steuer- und Auswerteinheit den Ultraschall-Sender im Impulsbetrieb mit Signalen, die während der Impulsdauern eine Frequenz von mehr als 3 MHz haben. Durch das Arbeiten mit so hohen Frequenzen lässt sich eine große Prüfempfindlichkeit erreichen. Eine schnelle Prüfung des Prüfobjekts durch eine hohe Relativgeschwindigkeit zwischen Ultraschall-Sender und -Empfänger und Prüfobjekt wird durch die Abstände des Senders und Empfängers von mindestens einer Ultraschallwellenlänge der ausgesendeten Ultraschallwellen ermöglicht.

Bei einer zweckmäßigen Ausführungsform, die eigenständigen erfinderischen Gehalt hat, weist ein Ultraschall-Prüfkopf für Longitudinal-Wellen eine zumindest teilweise kugeloberflächensegmentartige konkave oder konische Abstrahloberfläche auf, die an einem Rand einen kleineren radialen Abstand zu einer zentrischen Mittellinie des Ultraschall-Prüfkopfs hat, um die die Abstrahloberfläche symmetrisch angeordnet ist als am anderen Rand, dass die von der konkaven Abstrahlfläche ausgesandten Longitudinalwellen an einer Fokussierstelle konvergieren, die auf die Oberfläche des jeweiligen Gegenstands bzw. Prüflings eingestellt ist, und dass die Abstrahloberfläche derart auf die Oberfläche des Gegenstands bzw. Prüflings ausgerichtet ist, dass die Einschallwinkel zumindest eines Teils der Longitudinalwellen den Winkeln entsprechen, unter denen mit Longitudinalwellen Rayleigh-Wellen im Gegenstand bzw. Prüfobjekt erzeugbar sind.

Bei einer zweckmäßigen Ausführungsform ist die Abstrahloberfläche, die aus Segmenten aneinandergrenzender Ultraschall-Senderflächen gebildet sein kann, rotationssymmetrisch zur Mittellinie angeordnet und erzeugt ein Longitudinal-Wellenbündel, das durch einen gedachten Kegelmantel mit kleinerem Öffnungswinkel und einen gedachten Kegelmantel mit größerem Öffnungswinkel begrenzt ist. Die Spitzen der Kegel befinden sich an der gleichen Stelle, d. h. der Fokussierstelle. Der Ultraschall-Prüfkopf wird so auf die Oberfläche des Prüfobjekts ausgerichtet, dass die Kegelspitzen, die mit der Fokussierstelle übereinstimmen, auf der Oberfläche sind. Mit den oben beschriebenen Ultraschall-Prüfköpfen werden im Prüfobjekt Rayleigh-Wellen erzeugt, die sich von einem Punkt, nämlich der Fokussierstelle auf der Oberfläche ringförmig ausbreiten, wodurch alle Richtungen von den Rayleigh-Wellen auf der Oberfäche erfasst werden. Der Ultraschall-Prüfkopf ist insbesondere als Ultraschall-Sender- und Ultraschall-Empfänger vorgesehen, wobei der Ultraschall-Prüfkopf durch die Steuer- und Auswerteinheit auf die jeweilige Betriebsart als Sender oder Empfänger einstellbar ist. Als Sender wird der Prüfkopf von der Steuer- und Auswerteinheit mit elektrischen Impulsen beaufschlagt, die in Longitudinalwellen umgewandelt werden. Im Empfangsbetrieb wird ein Zeitfenster für den Empfang von reflektierten und in Longitudinalwellen umgewandelten Ultraschallwellen freigegeben, deren Verarbeitung in der Steuer- und Auswerteinheit geschieht.

Es hat sich gezeigt, dass sich besonders gute Ergebnisse bei der Prüfung von Gegenständen auf Gefügefehlstellen an oder nahe an der Oberfläche ergeben, wenn der Winkel, unter dem die Longitudinalwellen auf die Oberfläche auftreffen, um vier oder etwa vier Prozent größer ist als der Winkel ist, der als arcus sinus des Quotienten aus der Schallgeschwindigkeit im Material vor der Prüflingsoberfläche und der Geschwindigkeit der Oberflächenwelle im Prüfling bestimmbar ist. Die Toleranz des Winkels ist insbesondere 4 % ± 0,5°, vorzugsweise ± 0,2°.

Weitere Einzelheiten, Merkmale und Vorteile der Erfindung ergeben sich nicht nur aus den Ansprüchen und den diesen zu entnehmenden Merkmalen - für sich und/oder in Kombination, sondern auch aus der nachfolgenden Beschreibung von in einer Zeichnung dargestellten bevorzugten Ausführungsbeispielen.

Es zeigen:

Fig. 1 eine Vorrichtung zur zerstörungsfreien Prüfung von Gegenständen bzw. Prüfobjekten auf oberflächenoffene und/oder oberflächennahe Fehlstellen im Materialgefüge im Längsschnitt schematisch,

Fig. 2 die Vorrichtung gemäß Figur 1 im Querschnitt,

Fig. 3 eine andere Ausführungsform einer Vorrichtung zur zerstörungsfreien Prüfung von Gegenständen bzw. Prüfobjekten auf oberflächennahe und/oder oberflächenoffene Fehlstellen im Materialgefüge im Längsschnitt,

Fig. 4 die Vorrichtung gemäß Fig. 3 von unten und

Fig. 5 eine weitere Ausführungsform einer Vorrichtung zur zerstörungsfreien Prüfung von Gegenständen bzw. Prüfobjekten auf oberflächennahe und/oder oberflächenoffene Fehlstellen im Längsschnitt.

Eine Vorrichtung zur zerstörungsfreien Prüfung von Gegenständen bzw. Prüfobjekten auf oberflächenoffene und/oder oberflächennahe Fehlstellen im Materialgefüge, z. B. Risse, von Gegenständen enthält in einem Gehäuse 10 mehrere Ultraschallwandler. Ein erster Ultraschall-Sender in Form eines Ultraschall-Sendewandlers 12 und ein erster Ultraschall-Empfänger in Form eines Ultraschall-Empfängerwandlers 14, der im Abstand vom Ultraschall-Sendewandler 12 angeordnet ist, sind nahe an den Seiten des Gehäuses 10 angeordnet. Der Ultraschall-Sendewandler 12 und der Ultraschall-Empfängerwandler 14 arbeiten vorzugsweise nach dem piezoelektrischen Prinzip, d. h. es wird elektrische Hochfrequenzenergie in mechanische umgewandelt und umgekehrt. Der Ultraschall-Sendewandler 12 erzeugt longitudinale Wellen. Der Ultraschall-Empfängerwandler 14 ist für den Empfang longitudinaler Wellen ausgebildet. Die Längsachse 16 des Ultraschall-Sendewandler 12 und die Längsachse 18 des Ultraschall-Empfängerwandlers 14 liegen in einer gedachten, nicht näher dargestellten Ebene und schließen einen Winkel $\beta$ von weniger als 180° ein. Deshalb weisen die Längsachsen 16, 18 Neigungen $\alpha$ gegenüber der Werkstücknormalen n im Auftreffpunkt auf. Im Gehäuse 10 kann sich zwischen dem Ultraschall-Sendewandler 12 und dem Empfängerwandler 14 ein Hohlraum 22 befinden, der verhindert, dass vom Sendewandler 12 zum Empfängerwandler 14 Ultraschallwellen im Gehäuse 10 gelangen können.

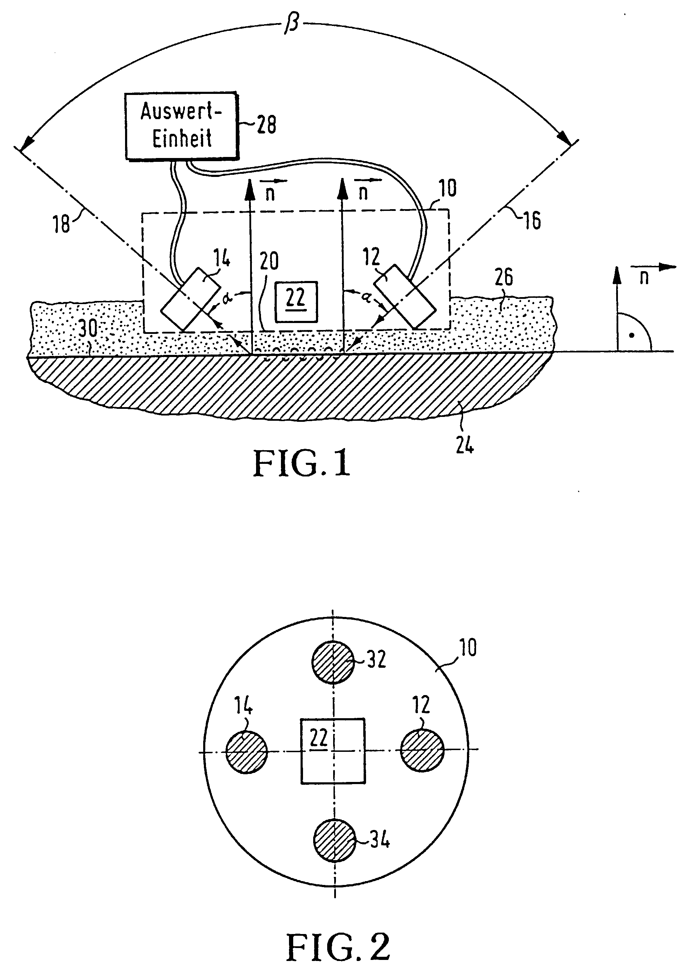

Das Gehäuse 10 und damit der Ultraschall-Sendewandler 12 und der Ultraschall-Empfängerwandler 14 sind bei der Prüfung auf Gefügefehler in einem gewissen Abstand von einem Gegenstand bzw. Prüfobjekt 24 angeordnet, von dem in Fig. 1 nur ein Teil im Längsschnitt dargestellt ist. Der Ultraschall-Sendewandler 12 und der Empfängerwandler 14 sind durch ein Medium 26, insbesondere Wasser in Tauchtechnik, d. h. in einem Flüssigkeitsbad an das Prüfobjekt 24 in einem Abstand von einer Wellenlänge der gesendeten Ultraschallwellen oder mehr als einer Wellenlänge angekoppelt. Die Schallgeschwindigkeit des Mediums 26 ist kleiner als die des Prüfobjekts. Der Ultraschall-Sendewandler 10 erhält von einer Steuer- und Auswerteinheit 28 über nicht näher bezeichnete Leitungen elektrische Hochfrequenzenergie im Impulsbetrieb zugeführt. Es werden Ultraschallimpulse mit einer Frequenz von mehr als 3 MHz während einer Impulsperiode angeregt, die von einer Impulspause unterbrochen ist, in der die Prüfvorrichtung für den Empfang von Ultraschallwellen vorbereitet ist. Der Ultraschall-Empfänger 14 ist über nicht näher bezeichnete Leitungen mit der Auswerteinheit 28 verbunden, in der die vom Ultraschall-Empfängerkopf 14 bei der Prüfung des Gegenstands bzw. Prüfobjekts 24 ausgegebenen Signale verarbeitet werden.
Die Oberfläche 30 des Gegenstands 24 bzw. Prüfobjekts ist bei der Prüfung auf oberflächenoffene und/oder oberflächennahe Fehlstellen im Materialgefüge in gleichmäßigem Abstand von der Seite 20 des Gehäuses 10 angeordnet. Der Winkel $\beta$ ist so gewählt, dass die vom Ultraschall-Senderkopf 12 ausgehenden Longitudinalwellen unter einem Winkel $\alpha$ schräg auf die Oberfläche 30 auftreten, der einem Grenzwinkel entspricht, bei dem durch die Longitudinalwellen im Prüfobjekt 24 Rayleigh-Wellen bzw. Oberflächenwellen entstehen, die sich längs der Oberfläche 30 bzw. im oberflächennahen Bereich des Gegenstands 24 fortpflanzen.
Die in der Rayleigh-Welle vorliegende Energie wird kontinuierlich in eine, in das Medium 26 abgestrahlte Longitudinalwelle rückgewandelt ("leaky Rayleigh wave"). Für den Abstand zwischen dem Ultraschall-Senderkopf 12 und dem Empfängerkopf 14 ergibt sich ein für die Erfassung von Gefügefehlern besonders günstiger Abstand, der experimentell, z.B. durch Messung an einer fehlerfreien Oberfläche, festgestellt wird.
Damit Fehler im Gefüge, die bis an die Oberfläche oder bis nahe an die Oberfläche heranreichen und eine beliebige Orientierung im Gegenstand bzw. Prüfobjekt 24 haben, erfasst werden können, sind im Gehäuse 10 ein zweiter Ultraschall-Sendewandler 32 und ein zweiter Ultraschall-Empfängerwandler 34 angeordnet. Der Ultraschall-Sendewandler 32 und der Empfängerwandler 34 stimmen im Aufbau der Wirkungsweise und der Neigung gegenüber der Seite 20 mit dem Ultraschall-Sendewandler 12 und dem Empfängerwandler 14 überein. Die Ultraschall-Empfängerwandler 14 und 34 sind unter den gleichen Winkeln $\alpha$ mit ihren Längsachsen 18 gegen die Oberflächennormale geneigt. Das Wandlerpaar aus dem Sendewandler 12 und dem Empfängerwandler 14 ist gegenüber dem Wandlerpaar aus dem Sendewandler 32 und dem Empfängerwandler 34 um 90° versetzt angeordnet. Dadurch entstehen im Prüfobjekt kreuzweise geführte Oberflächenwellen. Auch drei oder mehr Paare von Ultraschallsendern und -empfängern können eingesetzt werden.
Der optimale Winkel $\alpha$, d.h. der Einstrahlungswinkel bzw. Anstellwinkel der Ultraschall-Wandler zur Erzeugung der Rayleighwelle (im folgenden R-Welle genannt) ist abhängig von der Materialkombination, in der die Welle erzeugt wird. Der Winkel liegt ca. 4 % oberhalb des rechnerischen, sog. kritischen Winkels der R-Welle. Der kritische Winkel wiederum bestimmt sich aus den beteiligten Schallgeschwindigkeiten als arcus sinus des Quotienten der Geschwindigkeit der einfallenden Longitudinal-Welle zur Geschwindigkeit der R-Welle nach folgender Gleichung:

$$\alpha \text{ (ind) krit.} = \text{arc sin (c (ind)inc/c(ind)R)},$$

worin mit c(ind) inc die Longitudinal-Schallgeschwindigkeit im Ankoppelungsmedium vor der Prüflingsoberfläche und mit c(ind) R die R-Wellengeschwindigkeit bezeichnet sind.

Die oben beschriebene Vorrichtung verwendet in der vorgeschlagenen Bauart eine einfallende Longitudinalwelle in Wasser (c(ind)w = 1480 m/s) und eine R.-welle in ferritischem Feinkornstahl (c(ind)R = 3037 m/s). Die Geschwindigkeit der R.-Welle wird am besten gemessen werden, alternativ kann sie auch zu

$$0.95^* \text{ c(ind)t}$$

aus der Transversalwellengeschwindigkeit c(ind)t berechnet werden. Erhöht man den arcus sinus dieses Quotienten um 4 %, so erhält man den optimalen Anstellwinkel $\alpha$ zu 30,3°. Der Wert von

$$1.04^* \alpha \text{ (ind)krit.}$$

sollte auf zumindest < +/- 0,5°, insbesondere < +/- 0.2° eingehalten werden. Für Wasser/ferritischer Stahl beträgt der Winkel $\alpha$ also 30,3° +/- 0,5°, insbesondere 30,3° +/- 0,2°.

Wenn sich Gefügefehler im Prüfling 24 befinden, auf die die R-Wellen treffen, werden diese geschwächt. Dadurch weichen die Amplituden bzw. die Signalformen, die von den Ultraschall-Empfängerwandlern 14 bzw. 34 ausgegeben, werden von den Amplituden bzw. Signalformen ab, die bei fehlerfreien Abschnitten zwischen den Sendewandlern 12, 32 und Empfängerwandlern 14, 34 auf der Oberfläche entstehen. In der Auswerteinheit 28 sind Werte gespeichert, die fehlerfreien Abschnitten entsprechen, die von den R-Wellen im Bereich der Oberfläche 30 durchlaufen werden. Mit diesen in der Steuer- und Auswerteinheit 28 gespeicherten Werten, die z. B. durch Messung an einem als fehlerfrei bekannten Oberflächenabschnitt mit der oben beschriebenen Vorrichtung ermittelt bzw. gemessen werden, werden die während der Prüfung des Gegenstands bzw. Prüfobjekts von den Ultraschall-Empfängerwandlern 14, 34 ausgegebenen, verstärkten und z. B. digitalisierten Meßwerte auf Abweichungen hin verglichen. Abweichungen bestimmter Größe zeigen Gefügefehler an bzw. weisen auf Gefügefehler hin, die registriert und/oder gemeldet werden.

Die Ultraschall-Sendewandler 12, 32 und Empfängerwandler 14, 34 können fixe und übereinstimmende Winkel der Ausbreitungsrichtungen zu den Prüfkopfachsen bzw. Längsachsen 16, 18 haben, was bei der oben beschriebenen Vorrichtung vorliegt. Hierdurch lassen sich plane oder gekrümmte Oberflächen prüfen, deren Krümmung nicht so groß sein darf, dass die Brechungsbedingungen der R-Welle verletzt werden. Mit Prüfköpfen deren Ausbreitungswinkel gegenüber der Oberflächennormalen n im Auftreffpunkt individuell einstellbar sind, können auch mehrachsig stark gekrümmte Oberflächen auf oberflächenoffene oder oberflächennahe Gefügefehler mit genauer Erfassung der Fehler geprüft werden.

Durch die Relativbewegung zwischen der erfindungsgemäßen Vorrichtung und dem Gegenstand bzw. Prüfobjekt 24 wird die Oberfläche 30 zonenweise geprüft, wodurch sich eventuell auf der Oberfläche vorhandene Fehler erfassen und lokalisieren, d. h. den Stellen auf der Oberfläche zuordnen lassen. Aufgrund des Abstands von einer Ultraschallwellenlänge oder mehr von der Oberfläche des Prüfobjekts ist eine hohe Geschwindigkeit zwischen dem Prüfobjekt 24 und der Prüfvorrichtung möglich. Die Vorrichtung eignet sich daher insbesondere zur Qualitätsüberprüfung von Prüfobjekten bzw. Werkstücken in der Fertigung. Es wird dabei insbesondere die gesamte Oberfläche des jeweiligen Prüfobjekts mit Ultraschallwellen abgetastet.

Auch wenn zuvor von einem Vergleich von gespeicherten Werten gesprochen wird, ist dies nicht zwingend erforderlich. Vielmehr kann auch ein Vergleich durch einen Bediener zum Beispiel visuell an einem Bildschirm erfolgen. In der Regel findet aber ein automatischer Vergleich statt.

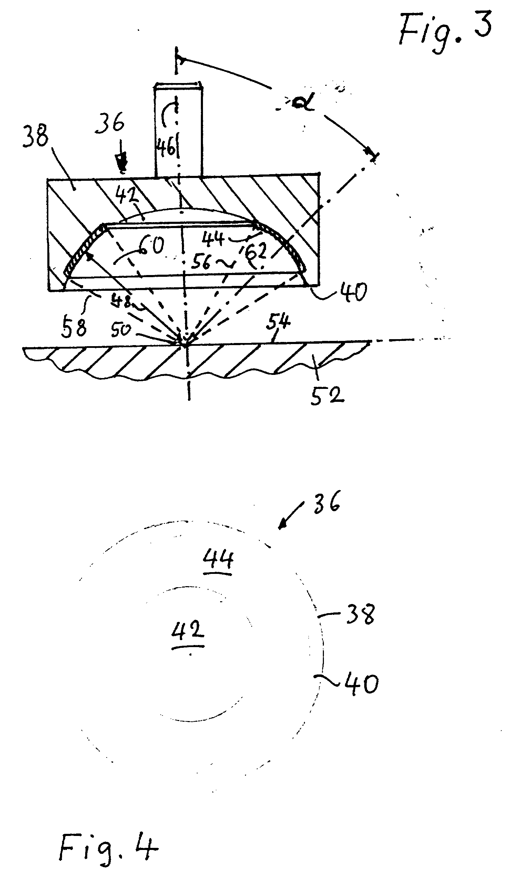

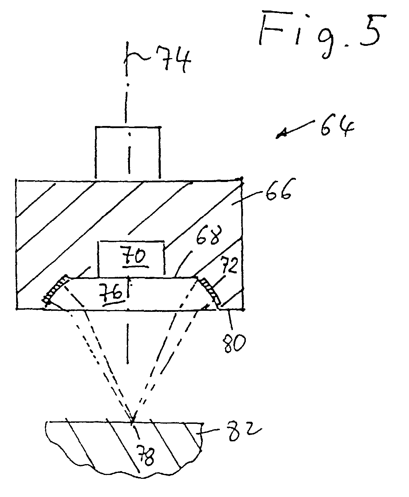

In Fig. 3 ist im Längsschnitt ein Ultraschall-Wandler 36 dargestellt, der sowohl als Empfänger wie auch als Sender für longitudinale Ultraschallwellen benutzt wird, die unter einem Winkel einem Prüfobjekt schräg zugeführt werden, so dass in diesem Rayleigh- bzw. Oberflächenwellen entstehen. Der Ultraschall-Wandler 36 enthält ein zylinderisches Gehäuse 38, von dessen einer Frontseite 40 ein kugelsegmentförmiger oder konischer Hohlraum 42 nach innen vorspringt. Eine kreisringförmige Zone 44 im Hohlraum 42, die symmetrisch zur Mittelachse 46 des Hohlraums 42 und des Gehäuses 38 verläuft, besteht aus einem piezoelektrischen Material, das zum Senden und zum Empfang von Ultraschallwellen bestimmt ist. Die Zone 44 hat eine hohlkugelsegmentförmige, d. h. konkave oder konische Abstrahloberfläche, deren konkave Krümmung vom Radius 48 des kugelsegmentartigen Hohlraums 40 abhängt. Aufgrund der konkaven Ober- bzw. Abstrahlfläche der Zone 44 konvergieren die erzeugten Longitudinalwellen in einem gedachten Punkt 50 bzw. einer Fokussierstelle 50. Ein Prüfobjekt 52 bzw. Werkstück wird so nahe an das Gehäuse herangebracht, dass sich die Fokussierstelle 50 auf der Oberfläche 54 befindet.

Aufgrund der Fokussierung der vom Ultraschall-Wandler 36 erzeugten Longitudinalwellen entsteht ein Wellenbündel, das praktisch von zwei gedachten Kegelmänteln, einem inneren Kegelmantel 56 und einem äußeren Kegelmantel 58, begrenzt ist. Die Bezeichnung innerer Kegelmantel 56 bedeutet, dass dieser ein größeres Stück im Hohlraum 42 verläuft als der äußere Kegelmantel 58. Beide Kegelmäntel 56, 58 sind gedachte Kegelmäntel und in Fig. 3 durch gestrichelte, auf den Kegelmänteln verlaufende Geraden dargestellt. Die Spitzen der Kegelmäntel 56, 58 haben den Punkt bzw. die Fokussierstelle 50 gemeinsam.

Die Kegelmäntel 56, 58 schließen mit der Abstrahloberfläche der Zone 44 einen rotationssymmetrischen bzw. ringförmigen geometrischen Körper 60 ein, der durch einen gedachten Kegelmantel 62 in zwei Hälften geteilt wird. Die nicht näher bezeichnete Basislinie des Kegelmantels 62 liegt in der Mitte der Abstrahloberfläche der Zone 44. Der Kegelmantel 62 ist in Fig. 3 durch eine strichpunktierte Linie dargestellt, die von der Spitze 50 als Gerade zur Basiskreislinie verläuft und gegen die ebene Mittellinie 46 unter dem Winkel α geneigt ist, dessen Größe oben eingehend beschrieben ist. Infolge der Neigung unter dem Winkel α entstehen im Prüfobjekt Rayleigh-Wellen, die von einer großen Zahl der vom Sender ausgestrahlten Ultraschallwellen ausgehen. Es kann aber auch die Abstrahlfläche der Zone 44 so auf den Gegenstand 52 ausgerichtet sein, dass alle Longitudinalwellen auf die Oberfläche 54 unter Winkeln auftreffen, die zur Erzeugung von Rayleigh-Wellen geeignet sind.

Die Resonanzfrequenz des die Zone 44 bildenden piezoelektrischen Materials ist vorzugsweise mehr als 3 MHz, z. B. 3,5 - 10 MHz. Die Zone 44 kann aus mehreren, nebeneinander angeordneten Piezo-Kristallen bestehen.

Die von dem Ultraschall-Wandler 36 erzeugten Ultraschallwellen rufen im Prüfobjekt Rayleigh-Wellen hervor, die sich kreisförmig radial ausbreiten und daher zugleich einen relativ großen Oberflächenbereich erfassen. Treffen die Rayleigh-Wellen auf eine Fehlstelle, z. B. einen Riss, werden sie an diesem reflektiert. Die reflektierten Rayleigh-Wellen gelangen wieder in den Bereich des Ultraschall-Wandlers 36, wo sie eine Longitudinalwelle im Ankoppelmedium hervorrufen, die vom Ultraschall-Wandler 36, der nun als Empfänger arbeitet, erfasst werden.

Der Ultraschall-Wandler 36 ist ebenso wie die in den Fig. 1 und 2 dargestellte Vorrichtung mit der Steuer- und Auswerteinheit 28 verbunden, die die elektrischen Sendesignale ausgibt und Zeitfenster für die Weiterleitung der empfangenen Signale des Ultraschall-Wandlers 36 vorgibt.

Für manche Anwendungsfälle ist es zweckmäßig, wenn die von einem Ultraschallsender erzeugten Ultraschallwellen durch eine Vorlaufstrecke auf ein Prüfobjekt bzw. einen Gegenstand auftreffen. Ein Ultraschall-Wandler 64 mit einer Vorlaufstrecke ist in Fig. 5 dargestellt.

Der Ultraschall-Wandler 64 hat ein zylindrisches Gehäuse 66, in das von einer Frontseite aus ein Hohlraum vorspringt, der aus einem ersten Abschnitt 68 und einem an diesen im Innern angrenzenden zylinderischen Abschnitt 70 besteht. Der Abschnitt 68 hat konkav ausgebildete, vom Gehäuserand nach innen verlaufende Wände, auf denen sich ringförmig piezoelektrisches Material 72 befindet. Das Material 72 ist symmetrisch zur Längsachse 74 angeordnet. In den Abschnitten 68, 70 befindet sich ein Block 76 aus Material, das die vom Material 72 ausgesandten Ultraschallwellen weiterleitet. Die Krümmung des Materials 72 ist so ausgebildet, dass die Longitudinalwellen in einem Punkt, der Fokussierstelle fokussiert werden. Da die Longitudinalwellen beim Austritt aus dem Block 76 gebrochen werden, ist die Krümmung des eine konkave Abstrahlfläche aufweisenden Materials 72 derart gewählt, dass die von den Abstrahlflächen ausgehenden Longitudinalwellen nach der Brechung im Punkt 78 zusammentreffen. Weiterhin sind die Krümmungen des Materials 72 und seine Anordnung im Gehäuse, d. h. die Ausrichtung in Bezug auf die Ebene 80 des Blocks 76 so gewählt, dass die Longitudinalwellen auf einen Gegenstand 82 unter Winkeln schräg auftreffen, die ausreichend für die Erzeugung von Rayleigh-Wellen sind.

Die Ultraschall-Wandler 36 und 64 sind ebenfalls wie die in Fig. 1 dargestellten Wandler in Tauchtechnik an die Prüfobjekte angekoppelt.

**Patentansprüche**

1. Verfahren zur zerstörungsfreien Prüfung von Gegenständen bzw. Prüfobjekten auf Fehlstellen im Gefüge, wobei der Oberfläche des jeweiligen Gegenstands bzw. Prüfobjekts Ultraschallwellen zur Erzeugung von Rayleigh-Wellen im Gegenstand bzw. Prüfobjekt schräg zugeführt werden, und wobei aus der Oberfläche des Gegenstands bzw. Prüfobjekts austretende, von den Rayleigh-Wellen verursachte Ultraschallwellen erfasst und deren Amplituden gemessen werden,
**dadurch gekennzeichnet**,
dass wenigstens ein Ultraschallsender (12; 36) und ein Ultraschall-Empfänger (14; 36) mit dem jeweiligen Gegenstand (24) bzw. Prüfobjekt zur Ankopplung der Ultraschallwellen in ein Flüssigkeitsbad eingetaucht werden, dass Ultraschallsender (12; 36) und Ultraschall-Empfänger (14; 36) jeweils in einem eine Ultraschallwellenlänge der vom Ultraschallsender (12; 36) ausgesendeten Ultraschallwellen betragenden Abstand oder in einem mehr als eine Ultraschallwelle betragenden Abstand von der Oberfläche des Gegenstands (24) bzw. Prüfobjekts angeordnet sind, dass Oberflächenabschnitte des Gegenstands (24) bzw. Prüfobjekts während einer Relativbewegung zwischen Ultraschall-Sender (12; 36) und Ultraschall-Empfänger (12; 36) einerseits und dem Gegenstand (24) bzw. Prüfobjekt andererseits mit den Ultraschallwellen beaufschlagt werden und dass die Amplituden der im Ultraschall-Empfänger (14; 36) erfassten Ultraschallwellen zur Feststellung von fehleranzeigenden Abweichungen aufgrund von oberflächennahen und/oder oberflächenoffenen Fehlstellen mit Werten für Amplituden verglichen werden, die Amplituden von Ultraschallwellen aus einem eine oberflächenoffene und/oder oberflächennahe Fehlstellen aufweisenden, von Rayleigh-Wellen durchlaufenen Oberflächenabschnitts entsprechen.

2. Verfahren nach Anspruch 1,
**dadurch gekennzeichnet**,
dass die Rayleigh- oder Oberflächenwellen in den zu prüfenden Gegenstands- bzw. Objektsbereichen in sich kreuzenden Richtungen zugleich oder zeitlich nacheinander mit getrennten Ultraschall-Sendern (12; 32) und Ultraschall-Empfängern (14; 34) erzeugt werden.

3. Verfahren nach Anspruch 1 oder 2,
**dadurch gekennzeichnet**,
dass die Ultraschallwellen im Impulsbetrieb mit einer Frequenz während der Impulsdauern von mehr als 3 MHz erzeugt werden.

4. Verfahren, insbesondere nach mindestens einem der vorhergehenden Ansprüche,
**dadurch gekennzeichnet**,
dass die Ultraschallwellen als Longitudinalwellen mit einem mindestens eine kugeloberflächensegmentförmig, konische oder konkave Abstrahlungsoberfläche aufweisenden Ultraschall-Sender (36) derart erzeugt werden, dass die Ultraschallwellen in einer Fokussierstelle (50) konvergieren, die auf die Oberfläche des Gegenstands (52) bzw. Prüfobjekts eingestellt wird, und dass die Einstrahlungswinkel wenigstens eines Teils der Longitudinalwellen den Winkel für die Erzeugung von Rayleigh-Wellen im Gegenstand bzw. Prüfobjekt entsprechen.

5. Verfahren nach mindestens einem der vorhergehenden Ansprüche,
**dadurch gekennzeichnet**,
dass der Ultraschall-Sender (36) zugleich als Ultraschall-Empfänger (36) ausgebildet ist, mit dem von oberflächennahen und/oder oberflächenoffenen Fehlstellen reflektierte Rayleigh-Wellen nach dem Übergang in Longitudinalwellen außerhalb des Gegenstands oder Prüflings empfangen und ausgewertet werden.

6. Verfahren nach zumindest einem der vorhergehenden Ansprüche,
**dadurch gekennzeichnet**,
dass der Einstrahlungswinkel der Ultraschallwellen an der Oberfläche des Gegenstands bzw. Prüfobjekts vier Prozent oder etwa 4 % größer als der Winkel ist, der als arcus sinus aus dem Quotienten der Schallgeschwindigkeit der einfallenden Ultraschallwelle und der Rayleigh-Welle im Gegenstand oder Prüfobjekt bestimmt wird.

7. Verfahren nach zumindest einem oder mehreren der vorhergehenden Ansprüche,
**dadurch gekennzeichnet**,
dass der Einstrahlungswinkel bei ferritischem Material des Gegenstands bzw. Prüfobjekts und Wasser als Ankopplungsmedium 30,3° ± 0,5°, insbesondere 30,3° ± 0,2° ist.

8. Vorrichtung zur zerstörungsfreien Prüfung von Gegenständen bzw. Prüfobjekten auf Fehlstellen im Gefüge mit wenigstens einem durch ein Medium an den jeweils zu prüfenden Gegenstand (24) bzw. das Prüfobjekt angekoppelten Ultraschall-Sender (12; 36), der Ultraschallwellen erzeugt und zur Hervorrufung von Rayleigh-Wellen ($\alpha$) schräg zur Oberfläche des Gegenstands bzw. Prüfobjekts ausgerichtet ist, wobei wenigstens ein durch das Medium an den Gegenstand- bzw. das Prüfobjekt angekoppelter Ultraschall-Empfänger (14; 36) für den Empfang von Ultraschallwellen ausgebildet ist, deren Amplituden gemessen werden,
**dadurch gekennzeichnet**,
dass der Ultraschall-Sender (12; 36; 64) und der Ultraschall-Empfänger (14; 36; 64) in Tauchtechnik in einer Flüssigkeit an den Gegenstand (24) bzw. das Prüfobjekt angekoppelt sind, in einem Abstand vom Gegenstand (24) bzw. Prüfobjekt angekoppelt sind, der eine Ultraschallwellenlänge der vom Ultraschall-Sender (12; 36; 64) ausgesendeten Ultraschallwellen oder mehr als eine Ultraschallwellenlänge beträgt, dass der Ultraschall-Sender (12; 36; 64) und der Ultraschall-Empfänger (14; 36; 64) einerseits und der Gegenstand (24) bzw. das Prüfobjekt andererseits relativ zueinander bewegbar sind und dass der Ultraschall-Sender (12; 36; 64) und der Ultraschall-Empfänger (14; 36, 64) mit einer Steuer- und Auswerteinheit (28) verbunden sind, mit der der Ultraschall-Sender (12) von elektrischen Impulsen beaufschlagt wird und in der die Amplituden der in vorgebbaren Zeitfenstern empfangenen Ultraschallwellen zur Feststellung von fehleranzeigenden Abweichungen aufgrund von oberflächennahen und/oder oberflächenoffenen Fehlstellen mit Werten von Amplituden verglichen werden, die Amplituden von Ultraschallwellen zugeordnet sind, die einer Oberfläche bzw. einem Oberflächenabschnitt ohne Fehlstellen an und/oder nahe an der Oberfläche zugeordnet sind.

9. Vorrichtung nach Anspruch 8,
**dadurch gekennzeichnet**,
dass zwei oder mehr Paare je aus einem Ultraschall-Sender (12; 32) und einem Ultraschall-Empfänger (14; 34) kreuzweise im Abstand am jeweiligen Gegenstand bzw. Prüfobjekt angeordnet sind.

10. Vorrichtung nach Anspruch 8 und 9,
   **dadurch gekennzeichnet**,
   dass die Steuer- und Auswerteinheit (24) den Ultraschall-Sender (12; 36) im Impulsbetrieb dergestalt mit Signalen beaufschlagt, dass die Ultraschallwellen während der Impulsdauern eine Frequenz von mehr als 3 MHz haben.

11. Vorrichtung, insbesondere nach zumindest einem der Ansprüche 8 bis 10,
   **dadurch gekennzeichnet**,
   dass ein Ultraschallwandler (36) für Longitudinalwellen eine zumindest teilweise kugeloberflächensegmentförmige, konische oder konkave Abstrahloberfläche aufweist, die an einem Rand einen kleineren radialen Abstand zu einer zentrischen Mittellinie (46; 74) des Prüfkopfs (36) hat, um die die Abstrahlfläche symmetrisch angeordnet ist, als am anderen Rand, dass die von der konkaven Abstrahlfläche ausgesandten Longitudinalwellen an einer Fokussierstelle (50) konvergieren, die auf die Oberfläche (54) des jeweiligen Gegenstands bzw. Prüflings eingestellt ist, und dass die Abstrahlfläche derart auf die Oberfläche (54) des jeweiligen Gegenstands bzw. Prüflings ausgerichtet ist, dass die Einschallwinkel zumindest eines Teils der Longitudinalwellen den Winkeln entsprechen, unter denen mit Longitudinalwellen Rayleigh-Wellen im Gegenstand bzw. Prüfobjekt erzeugbar sind.

12. Vorrichtung nach Anspruch 11,
   **dadurch gekennzeichnet**,
   dass die Abstrahlfläche rotationssymetrisch zur Mittellinie (46) angeordnet ist.

13. Vorrichtung nach Anspruch 11 oder 12,
   **dadurch gekennzeichnet**,
   dass der Ultraschallwandler (36) als Sender und Empfänger für Ultraschallwellen vorgesehen ist und dass der Ultraschallwandler (36) durch die Steuer- und Auswerteinheit (28) für die Betriebsart als Sender oder Empfänger auswählbar ist.

14. Vorrichtung nach zumindest einem der Ansprüche 8 bis 13,
   **dadurch gekennzeichnet**,
   dass der Winkel α, unter dem die Longitudinalwellen zur Normalen auf die Oberfläche (30) des Gegenstands oder Prüfobjekts (24) auftreffen, vier oder etwa vier Prozent größer ist als der Winkel, der als arcus sinus des Quotienten aus der Schallgeschwindigkeit in Medium (26) von der Gegenstands- bzw. Prüflingsoberfläche (30) und der Geschwindigkeit der Oberflächen- bzw. Rayleigh-Welle im Prüfling bestimmbar ist.

15. Vorrichtung nach Anspruch 14,
   **dadurch gekennzeichnet**,
   dass die Toleranz des Winkels vier % ± 0,5, insbesondere vier % ± 0,2 % ist.

16. Vorrichtung nach zumindest einem der Ansprüche 8 bis 15,
   **dadurch gekennzeichnet**,
   dass der Winkel α, unter dem die Longitudinalwellen auf die Oberfläche (30) des Gegenstands bzw. Prüfobjekts auftreffen, bei ferritischem Material des Gegenstands bzw. Prüfobjekts und Wasser als Ankoppelmedium an der Auftreffstelle der Longitudinalwellen auf der Oberfläche 30,3° ± 0,5, insbesondere 30,3° ± 0,2° ist.

17. Vorrichtung nach zumindest einem der Ansprüche 8 bis 10,
   **dadurch gekennzeichnet**,
   dass bei den Ultraschall-Sendern (12; 32) und den Ultraschall-Empfängern (14; 34) die Längsachsen (16, 18) mit den Winkeln der Ausbreitungsrichtungen der Longitudinalenwellen übereinstimmend eingestellt sind.

18. Vorrichtung nach zumindest einem der Ansprüche 8 bis 10,
   **dadurch gekennzeichnet**,
   dass bei den Ultraschall-Sendern und Ultraschall-Empfängern die Winkel der Ausbreitungsrichtungen der Longitudinalwellen gegenüber den Längsachsen veränderbar sind.

19. Vorrichtung nach zumindest einem der Ansprüche 8 bis 18,
   **dadurch gekennzeichnet**,
   dass die in der Auswerteinheit gemessenen Signalamplituden visuell insbesondere an einem Bildschirm verglichen werden.

β

Auswert-
Einheit —28

$\overrightarrow{n}$   $\overrightarrow{n}$

10

18   16

$\overrightarrow{n}$

14   20   12

α   22   α   26

30

24

# FIG. 1

32

14   10

22

12

34

# FIG. 2

Fig. 3

Fig. 4

Fig. 5